# EUROPÄISCHE PATENTSCHRIFT

(11) **EP 3 106 720 B1**
(45) Veröffentlichungstag und Bekanntmachung des Hinweises auf die Patenterteilung: **28.11.2018**
(21) Anmeldenummer: 16001026.0
(22) Anmeldetag: 06.05.2016
(51) Int. Cl.: F16K 5/06, F16K 5/10, F16K 15/18, F16K 17/30

(54) **UMSCHALTVORRICHTUNG IN FORM EINES KUGELHAHNS**
SWITCHING DEVICE IN THE FORM OF A BALL VALVE
DISPOSITIF DE COMMUTATION EN FORME DE ROBINET A TOURNANT SPHERIQUE

(30) Priorität: 16.06.2015 DE 102015007598
(43) Veröffentlichungstag der Anmeldung: 21.12.2016
(73) Patentinhaber: HYDAC Accessories GmbH, 66280 Sulzbach/Saar (DE)
(72) Erfinder: Käfer, Jürgen, 66578 Schiffweiler (DE)
(74) Vertreter: Bartels und Partner, Patentanwälte

(56) Entgegenhaltungen:
- DE-A1-102008 052 855
- GB-A- 1 418 245
- JP-A- S59 147 170
- US-A- 3 339 580
- US-A- 5 373 868
- US-A- 5 944 051
- US-A1- 2008 006 330

## Beschreibung

Die Erfindung betrifft eine Umschaltvorrichtung mit den Merkmalen des Oberbegriffes des Patentanspruches 1.

Kugelhähne kommen in einem weiten Anwendungsbereich und in vielen Industriezweigen zum Einsatz. Sie zeichnen sich durch eine kompakte Bauweise und leichte Schaltbarkeit mit geringen Umschaltkräften auch unter hohen Drücken aus. Sie eignen sich auch für pulsierende Drücke und leckfreie Abdichtungen. Ein Beispiel eines derartigen Kugelhahns mit einem Steuerkörper in Form einer in einem Dichtsystem geführten Schaltkugel ist beispielsweise in dem Dokument DE 103 15 896 A1 offenbart.

Durch GB 1 418 245 A ist eine Umschaltvorrichtung bekannt in Form eines Kugelhahnes, mit einem in einem Ventilgehäuse drehbar geführten Steuerkörper, der in einer sperrenden Funktionsstellung mindestens zwei Anschlussstellen im Ventilgehäuse voneinander trennt und in mindestens einer weiteren Funktionsstellung fluidführend miteinander verbindet, wobei innerhalb des Steuerkörpers eine Ventileinrichtung in Form eines drehbaren Steuerventils angeordnet ist, das als federbelastetes, den Fluidweg sperrendes Rückschlagventil dient sowie in entsprechend vorgebbaren Drehstellungen Stellungen einen Fluiddurchlass durch die Ventileinrichtung ermöglicht.

Durch US 5 944 051 A, US 5 373 868 A und DE 10 2008 052 855 A1 sind weitere Umschaltvorrichtungen in vergleichbarer Kugelhahnausführung bekannt, bei der der jeweilige als Schaltkugel ausgebildete Steuerkörper mindestens ein federbelastetes Rückschlagventil als Ventileinrichtung aufweist, die in einer Schaltstellung des Steuerkörpers respektive der Schaltkugel einen Fluidweg zwischen gegenüberliegenden fluidführenden Anschlussstellen im Ventilgehäuse freigibt oder in einer mindestens weiteren Funktionsstellung den dahingehenden Fluidweg sperrt.

Durch JP S59147170A ist darüber hinaus eine Umschaltvorrichtung mit einem integrierten Stromregelventil bekannt, das in einer Schaltkugel integriert aus seiner einen fluidführenden Funktionsstellung in eine nicht fluidführende Sperrstellung bringbar ist.

Durch US 2008/006330 A1 ist ein Stromregelventil als solches bekannt, das als Ventilbetätigungsteil einen federbelasteten Regelkolben aufweist, der in Abhängigkeit von der an einer Messblende bei Durchströmung, in der für den Betrieb einzig vorgesehenen Strömungsrichtung, erzeugten Druckdifferenz den Querschnitt einer Regelblende in Form von Wandöffnungen im Ventilgehäuse steuert. Ebenso US 3 339 580 A.

Ausgehend von diesem Stand der Technik stellt sich die Erfindung die Aufgabe,eine Umschaltvorrichtung der genannten Gattung zur Verfügung zu stellen, die sich durch ein erweitertes Anwendungsspektrum auszeichnet.Erfindungsgemäß ist diese Aufgabe durch eine Umschaltvorrichtung gelöst, die die Merkmale des Patentanspruches 1 in seiner Gesamtheit aufweist.

Gemäß dem kennzeichnenden Teil des Patentanspruches 1 zeichnet sich die Erfindung dadurch aus, dass bei der ersten, nicht sperrenden Funktionsstellung vom zweiten Fluidanschluss her und über Wandöffnungen im Ventilgehäuse die Ventileinrichtung in einer Richtung derart durchströmt ist, dass die Ventileinrichtung ungeregelt und lediglich unter der Drosselwirkung einer an einer Bohrung im Kolbenboden eines Regelkolbens eines Stromregelventils angeordneten Messblende durchströmt ist, so dass die Ventileinrichtung als Drosselventil arbeitet und dass, wenn die Schaltkugel demgegenüber um 180° Grad in die zweite, nicht sperrende Funktionsstellung verdreht ist, die Ventilfunktion entsprechend umgekehrt ist, so dass mittels des Stromregelventils eine Volumenstromregelung bei Zustrom vom zweiten Fluidanschluss her erfolgt und eine ungeregelte Durchströmung bei Fluideintritt vom ersten Fluidanschluss her stattfindet.
Bei dieser Ausgestaltung eröffnen sich für die erfindungsgemäße Umschaltvorrichtung besonders vorteilhafte Einsatzmöglichkeiten, beispielsweise für eine druckunabhängige Geschwindigkeitsregelung von lastbeaufschlagten Verbrauchern, wie für eine Begrenzung der maximalen Geschwindigkeit von Lastaufnahmemitteln oder sonstigen Aktoren für die Einhaltung geltender Unfallverhütungsvorschriften.
Ebenso kann bei mehreren an einer zu hebenden oder abzusenkenden Last angreifenden Hubzylindern, die jeweils über eine erfindungsgemäße Umschaltvorrichtung betätigt sind, ein druckunabhängiger Gleichgang für die Ausfahr- und/oder Einfahrbewegung der Zylinder vorgegeben werden, indem die Steuerkörper in eine der beiden nicht sperrenden Funktionsstellungen geschaltet werden, wobei die Kolbenbewegungen in der sperrenden Funktionsstellung fixiert sind. Je nach Einstellung auf eine der beiden nicht sperrenden Funktionsstellungen kann die Verfahrbewegung des oder der Kolben in einer Verfahrrichtung mit gewünschten vorgegebenen Geschwindigkeiten in einer oder in der anderen Verfahrrichtung erfolgen, während in der hierzu jeweils entgegengesetzten Verfahrrichtung die Bewegung ungeregelt und lediglich mit der durch die Messblende gebildeten Drosselung stattfindet. Beispielsweise kann das Heben einer Last mit einer gewünschten maximalen Hubgeschwindigkeit, ungeregelt und lediglich unter der Drosselung der Blenden, erfolgen, während das Absenken der Last geregelt mit gewünschter, begrenzter Absenkgeschwindigkeit erfolgt. Ebenso können je nach Schaltstellung Ausfahr- und Einfahrbewegungen ungeregelt oder sowohl Ausfahr- als auch Einfahrbewegung mit gewählter, nicht sperrender Funktionsstellung geregelt erfolgen.

Dadurch eröffnet sich die Möglichkeit, dass die Umschaltvorrichtung im angeschlossenen Fluidsystem, über die normale Funktion als schaltbares Sperrelement hinaus, eine weitere Zusatzfunktion übernehmen kann, bei der das Durchflussverhalten nicht nur in Abhängigkeit von der Funktionsstellung (Drehposition) des Steuerkörpers modifiziert ist, sondern auch in Abhängigkeit von weiteren Parametern wie Durchstromrichtung oder Volumenstrom. In vorteilhafter Weise lässt sich daher der Bauaufwand bei dem zugeordneten Fluidsystem verringern.

In besonders vorteilhafter Weise kann hierbei die Ventileinrichtung mindestens ein Ventilbetätigungsteil aufweisen, das unter der Wirkung eines Energiespeichers in eine vorzugsweise regelnde oder sperrende Wirkstellung bringbar ist. Dadurch lässt sich auf einfache Weise eine selbsttätige, druckgesteuerte Ventilfunktion der Ventileinrichtung realisieren.

In besonders vorteilhafter Weise kann als Ventileinrichtung ein Stromregelventil mit nachgeschalteter Druckwaage vorgesehen sein, das als Ventilbetätigungsteil einen federbelasteten Regelkolben aufweist, der in Abhängigkeit von der an einer Messblende bei Durchströmung in der einen Strömungsrichtung erzeugten Druckdifferenz den Querschnitt einer Regelblende steuert, wobei die Ventileinrichtung bei Durchströmung in der anderen Strömungsrichtung ungeregelt durchströmbar ist.

In besonders vorteilhafter Weise kann die Ventileinrichtung in Form eines Schraubeinsatzes in einen zur Drehachse senkrechten Durchgangskanal des Steuerkörpers einschraubbar sein, wobei der Regelkolben im Schraubeinsatz durch eine Druckfeder in eine den Querschnitt der Regelblende freigebende Endlage vorgespannt ist, wobei die Messblende durch eine Bohrung im Kolbenboden ausgebildet ist und wobei der Regelkolben an einer Bohrung im Kolbenboden angeordnet ist und der Regelkolben durch das an der Messblende bei Durchströmung in der einen Richtung erzeugte Druckgefälle in den Querschnitt der Regelblende verringerte Stellungen bewegbar ist.

Weiterhin kann die Anordnung mit Vorteil so getroffen sein, dass am Ventilgehäuse Rast- und/oder Feststellmittel vorgesehen sind, mittels deren ein Drehbetätigungsteil des Steuerkörpers in den um 180° zueinander versetzten Funktionsstellungen und in der zwischen diesen gelegenen sperrenden Funktionsstellung lösbar festlegbar ist. Dadurch, dass dergestalt die Gefahr minimiert ist, dass der Steuerkörper ungewollt, beispielsweise durch Strömungseinflüsse oder durch eine unbeabsichtigte Krafteinwirkung auf einen Handhebel, der für manuelles Schalten des Steuerkörpers mit dem Drittbetätigungsteil verbunden ist, aus der gewählten Funktionsstellung heraus verdreht wird, ist eine hohe Betriebssicherheit der Umschaltvorrichtung gewährleistet.

Nachstehend ist die Erfindung anhand eines in der Zeichnung dargestellten Ausführungsbeispieles im Einzelnen erläutert. Es zeigen:
- Fig. 1: eine perspektivische Schrägansicht der erfindungsgemäßen Umschaltvorrichtung in Form eines Kugelhahns;
- Fig. 2: einen annähernd in natürlicher Größe einer praktischen Ausführungsform dargestellten, mittigen Längsschnitt des Kugelhahnes ohne Betätigungs-Handhebel;
- Fig. 3: einen vergrößert gezeichneten Längsschnitt der gesondert dargestellten Ventileinrichtung;
- Fig. 4: eine Symboldarstellung der Ventilfunktionen der Ventileinrichtung von Fig. 3 in der einen oder anderen Durchströmungsrichtung;
- Fig. 5: eine Draufsicht bei abgenommenem Handhebel, wobei eine erste nicht sperrende Funktionsstellung gezeigt ist; und
- Fig. 6 und 7: der Fig. 5 entsprechende Draufsichten, wobei die erste nicht sperrende Funktionsstellung bzw. die zweite nicht sperrende Funktionsstellung gezeigt sind.

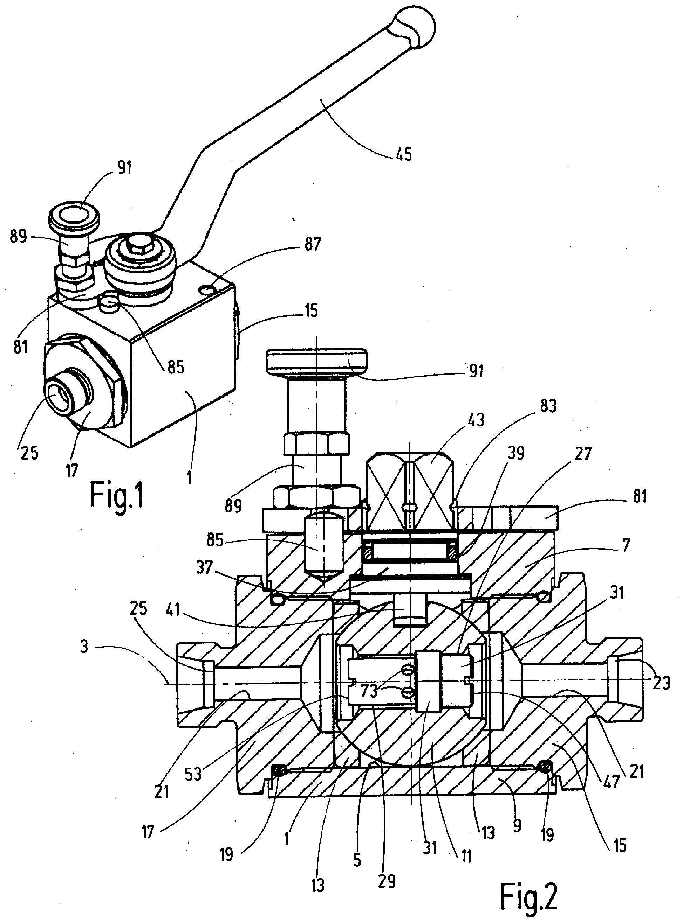

In der Zeichnung, ist die erfindungsgemäße Umschaltvorrichtung in Form eines Kugelhahnes dargestellt, dessen Ventilgehäuse mit 1 bezeichnet ist. Dieses weist entlang einer Längsachse 3 einen Durchgang 5 auf, der aus der Mitte des Gehäuses 1 versetzt ist, so dass der in Fig. 2 obenliegende Gehäuseteil 7 eine größere Wandstärke besitzt als der unten liegende Gehäuseteil 9. Bezogen auf die Längsachse 3 ist mittig im Durchgang 5 eine Schaltkugel 11 zwischen zwei Dichtschalen 13 gelagert, die axial an je einem Endkörper 15 und 17 abgestützt sind. Diese Endkörper 15, 17, die als gleich ausgebildete Einschraubteile als Verschluss des Durchganges 5 an beiden Enden des Ventilgehäuses 1 eingeschraubt und mittels je eines Dichtringes 19 abgedichtet sind, weisen je einen zur Achse 3 koaxialen Strömungskanal 21 auf, an deren äußerem Ende sich am Endkörper 15 ein erster Fluideinschluss 23 und am anderen Endkörper 17 ein zweiter Fluidanschluss 25 befinden.

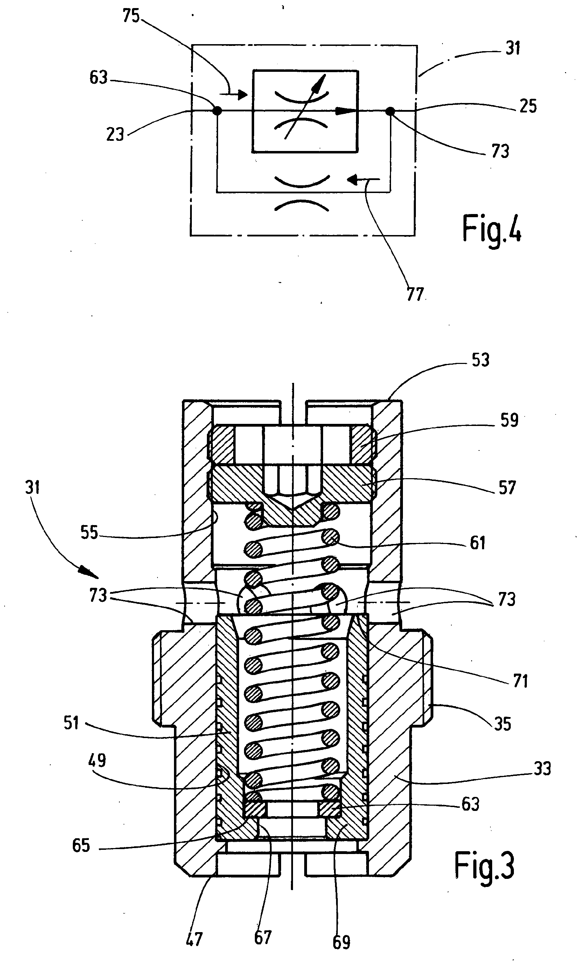

In den Fig. 1, 2 und 5 ist der Kugelhahn in einer ersten von drei vorgesehenen Funktionsstellungen der Schaltkugel 11 dargestellt, bei denen die Schaltkugel 11 jeweils um 90° unterschiedliche Drehpositionen einnimmt. Bei der gezeigten ersten Funktionsstellung handelt es sich um eine nicht sperrende Funktionsstellung, bei der eine Durchgangsbohrung 27 in der Schaltkugel 11 mit den sich entlang der Achse 3 erstreckenden Kanälen 21 fluchtet. Die Durchgangsbohrung 27 weist einen Gewindeabschnitt 29 auf, in dem eine Ventileinrichtung 31 in Form eines in Fig. 3 gesondert dargestellten Schraubeinsatzes 33 mit einem Außengewinde 35 einschraubbar ist. Zur Einstellung der Schaltkugel 11 in die Funktionsstellungen ist in dem Gehäuseteil 7 eine Schaltspindel 37 drehbar gelagert, wobei ein Dichtring 39 eine Gehäuseabdichtung bildet. Ein unrunder Steg 41 am inneren Ende der Schaltwelle 37 greift für die Drehbetätigung der Schaltkugel 11 in einen in dieser ausgebildeten Schlitz ein. Ein am äußeren Ende der Schaltwelle 37 befindlicher Vierkant 43 dient dem Angriff eines Betätigungswerkzeuges, beispielsweise in Form eines lediglich in Fig. 1 dargestellten Handhebels 45.

Wie in Fig. 3 gezeigt, ist als Ventileinrichtung 31 ein 2-Wege-Stromregelventil in der Bauweise eines Festblendenventils mit nachgeschalteter Druckwaage vorgesehen. Der eine Ventilpatrone bildende Schraubeinsatz 33 hat die Form einer Hülse, die in einem Längenabschnitt, der sich bis in die Nähe des in Fig. 3 unten liegenden offenen Endes 47 des Schraubeinsatzes 33 erstreckt, eine zylindrische Kolbenführung 49 für einen Regelkolben 51 bildet. Vom gegenüberliegenden offenen Ende 53 ausgehend weist der Schraubeinsatz 33 ein Innengewinde 55 auf, in dem sich eine Einstellmutter 57 befindet, die durch eine Gegenmutter 59 gesichert ist und die Anlage für ein Ende einer Druckfeder 61 bildet, deren anderes Ende sich an einem eine Messblende bildenden Blendeneinsatz 63 abstützt, der wiederum am Öffnungsrand 65 einer Öffnung 67 im Kolbenboden 69 des Regelkolbens 51 axial festgelegt ist. Das dem Kolbenboden 69 entgegengesetzte Ende des Regelkolbens 51 bildet die Regelkante 71, deren Position sich im Regelbetrieb relativ zu Wandöffnungen 73 verändert, die die Regelblende bilden. Wenn bei der ersten Funktionsstellung, wie sie in Figuren 1, 2 und 5 gezeigt ist, das Fluid vom ersten Fluidanschluss 23 her über das Ende 47 in die Ventileinrichtung 31 einströmt, erzeugt das an der Messblende 63 auftretende Druckgefälle eine gegen die Druckfeder 61 wirkende Kolbenkraft am Regelkolben 51, die bei entsprechendem Volumenstrom zu einer Verschiebung des Regelkolbens 51 in Fig. 3 nach oben erfolgt, die den Querschnitt der Regelblende (Öffnungen 63) verringert, bis eine Regelposition erreicht ist, die dem Kräftegleichgewicht aus Druckgefälle mal Regelkolbenfläche einerseits und der Kraft der Druckfeder 61 andererseits entspricht, so dass sich ein vom Eingangsdruck unabhängiger Volumenstrom einstellt. Wenn bei gleicher erster Funktionsstellung die Durchströmung vom zweiten Fluidanschluss 25 her und über die Wandöffnungen 73 die Ventileinrichtung 31 in umgekehrter Richtung durchströmt, ist die Ventileinrichtung 31 ungeregelt und lediglich unter der Drosselwirkung der Messblende 63 durchströmbar, so dass die Ventileinrichtung 31 als Drosselventil arbeitet, s. Fig. 4, wo die Stromrichtungen mit Strömungspfeilen 75 bzw. 77 angedeutet sind. Wird die Schaltkugel 11 demgegenüber um 180° in die zweite nicht sperrende Funktionsstellung verdreht, ist die Ventilfunktion entsprechend umgekehrt, so dass die Volumenstromregelung bei Zustrom vom zweiten Fluidanschluss 25 her erfolgt und die ungeregelte Durchströmung bei Fluideintritt vom ersten Fluidanschluss 23 her stattfindet.

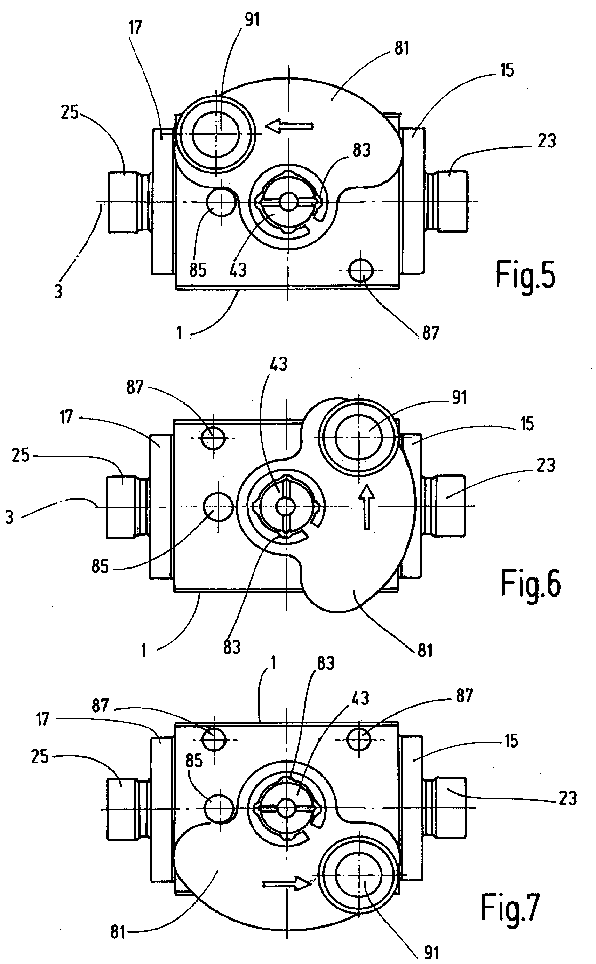

Für die definierte Funktionseinstellung der Schaltwelle 37 in die drei vorgesehenen Funktionsstellungen ist auf der Oberseite des oberen Gehäuseteiles 7 eine Anschlagscheibe 81 vorgesehen, deren Umrissform am deutlichsten in Fig. 5 bis 7 gezeigt ist. Die von der Schaltwelle 37 durchgriffene Anschlagscheibe 81 ist gegen axiales Abheben mittels eines Sprengringes 83 am Vierkant 43 der Schaltwelle 37 gesichert. Sowohl in der in Fig. 5 gezeigten ersten nicht sperrenden Funktionsstellung als auch in der in Fig. 7 gezeigten zweiten nicht sperrenden Funktionsstellung liegt die Anschlagscheibe 81 an einem Anschlagstift 85 an, der in den Gehäuseteil 7 eingesetzt ist. Zur Bildung einer lösbaren Rast- oder Festlegeeinrichtung sind im Gehäuseteil 7 außerdem für die beiden nicht sperrenden, um 180° zueinander verdrehten Funktionsstellungen sowie für die demgegenüber um 90° verdrehte, dazwischenliegende sperrende Funktionsstellung jeweils eine Sackbohrung 87 im Gehäuseteil 7 gebildet. Bei Einstellung auf eine der Funktionsstellungen kommt ein federbelasteter Arretierbolzen, der sich in einem an der Anschlagscheibe 81 angebrachten Federgehäuse 89 (Figuren 1 und 2) befindet, in Eingriff mit einer der Sackbohrungen 87. Zum Lösen der dadurch gebildeten Verriegelung ermöglicht eine relativ zum Federgehäuse 83 bewegbare Handhabe 91 das Ausheben des Bolzens aus der jeweiligen Sackbohrung 87.

## Patentansprüche

1. Umschaltvorrichtung, in Form eines Kugelhahns, mit einem in einem Ventilgehäuse (1) drehbar geführten Steuerkörper (11) in Form einer Schaltkugel, das zwei Anschlussstellen (23, 25) aufweist, **dadurch gekennzeichnet, dass** die zwei Anschlussstellen (23, 25) bei zwei um 180° Grad gegeneinander verdrehten Funktionsstellungen des Steuerkörpers (11) über eine innerhalb des Steuerkörpers (11) angeordnete Ventileinrichtung (31) verbindbar und bei einer zwischen diesen gelegenen, sperrenden Funktionsstellung voneinander getrennt sind, wobei bei der ersten, nicht sperrenden Funktionsstellung vom zweiten Fluidanschluss (25) her und über Wandöffnungen (73) im Ventilgehäuse (1) die Ventileinrichtung (31) in einer Richtung derart durchströmt ist, dass die Ventileinrichtung (31) ungeregelt und lediglich unter der Drosselwirkung einer an einer Bohrung (67) im Kolbenboden (69) eines Regelkolbens (51) eines Stromregelventils (33) angeordneten Messblende (63) durchströmt ist, so dass die Ventileinrichtung (31) als Drosselventil arbeitet, und dass, wenn die Schaltkugel demgegenüber um 180° Grad in die zweite, nicht sperrende Funktionsstellung verdreht ist, die Ventilfunktion entsprechend umgekehrt ist, so dass mittels des Stromregelventils (33) eine Volumenstromregelung bei Zustrom vom zweiten Fluidanschluss (25) her erfolgt und eine ungeregelte Durchströmung bei Fluideintritt vom ersten Fluidanschluss (23) her stattfindet.

2. Umschaltvorrichtung nach Anspruch 1, **dadurch gekennzeichnet, dass** die Ventileinrichtung (31) mindestens ein Ventilbetätigungsteil (51) aufweist, das unter der Wirkung eines Energiespeichers (61) in eine vorzugsweise regelnde oder sperrende Wirkstellung bringbar ist.

3. Umschaltvorrichtung nach Anspruch 1 oder 2, **dadurch gekennzeichnet, dass** das Stromregelventil (33) eine nachgeschaltete Druckwaage aufweist, das als Ventilbetätigungsteil einen federbelasteten Regelkolben (51) aufweist, der in Abhängigkeit von der an einer Messblende (63) bei Durchströmung in der einen Strömungsrichtung erzeugten Druckdifferenz den Querschnitt einer Regelblende (73) steuert, wobei die Ventileinrichtung (31) bei Durchströmung in der anderen Strömungsrichtung ungeregelt durchströmbar ist.

4. Umschaltvorrichtung nach einem der vorstehenden Ansprüche, **dadurch gekennzeichnet, dass** die Ventileinrichtung (31) in Form eines Schraubeinsatzes (33) in einen zur Drehachse senkrechten Durchgangskanal des Steuerkörpers (11) einschraubbar ist, dass der Regelkolben (51) im Schraubeinsatz (33) durch eine Druckfeder (61) in eine den Querschnitt der Regelblende (73) freigebende Endlage vorgespannt ist, und dass der Regelkolben (51) durch das an der Messblende (63) bei Durchströmung in der einen Richtung erzeugte Druckgefälle in den Querschnitt der Regelblende (73) verringernde Stellungen bewegbar ist.

5. Umschaltvorrichtung nach einem der vorstehenden Ansprüche, **dadurch gekennzeichnet, dass** am Ventilgehäuse (1) Rast- und/oder Feststellmittel (87) vorgesehen sind, mittels deren ein Drehbetätigungsteil (37, 45) des Steuerkörpers (11) in den um 180° zueinander versetzten Funktionsstellungen und in der zwischen diesen gelegenen sperrenden Funktionsstellung lösbar festlegbar ist.

## Claims

1. A switching device, in the form of a ball valve, with a control body (11) in the form of a switching ball, which body is guided rotatably in a valve housing (1) which has two connection points (23, 25),
**characterised in that** the two connection points (23, 25) can be connected, rotated against one another by 180° degrees via a valve device (31) arranged inside the control body (11), at two functional positions of the control body (11), and are separated from one another at a locking functional position placed therebetween,
wherein the first, non-locking functional position is flowed through from the second fluid connection (25) and, via wall openings (73) in the valve housing (1), the valve device (31) is flowed through in a direction such that the valve device (31) is flowed through in uncontrolled manner and merely accompanied by the throttle effect of a measuring orifice (63) arranged at a bore (67) in the piston head (69) of a control piston (51) of a flow-regulating valve (33), with the result that the valve device (31) acts as a throttle valve, and that, if the switching ball is rotated about 180° degrees the other way into the second, non-locking functional position, the valve function is accordingly reversed, with the result that a volume flow control takes place during inflow from the second fluid connection (25) by means of the flow-regulating valve (33) and an uncontrolled flow takes place when fluid enters from the first fluid connection (23).

2. The switching device according to claim 1, **characterised in that** the valve device (31) has at least one valve-actuating part (51) which can be brought into a preferably controlling or locking functional position, accompanied by the action of an energy store (61).

3. The switching device according to claim 1 or 2, **characterised in that** the flow-regulating valve (33) has a downstream pressure maintenance valve which has a spring-loaded control piston (51) as valve-actuating part, which piston controls the cross-section of a control orifice (73) depending on the pressure difference generated at a measuring orifice (63) during flow in the one flow direction, wherein the valve device (31) can be flowed through in uncontrolled manner when flow occurs in the other flow direction.

4. The switching device according to one of the preceding claims, **characterised in that** the valve device (31) can be screwed in the form of a screw bit (33) into a throughput channel of the control body (11) parallel to the axis of rotation, that the control piston (51) is pre-tensioned in the screw bit (33) by a compression spring (61) in an end position which clears the cross-section of the control orifice (73), and that the control piston (51) can be moved by the drop in pressure generated at the measuring orifice (63) when flow takes place in the one direction in positions reducing the cross-section of the control orifice (73).

5. The switching device according to one of the preceding claims, **characterised in that** catching and/or fixing means (87) are provided at the valve housing (1), by means of which means a rotary actuation part (37, 45) of the control body (11) can be fixed detachably in the functional positions offset from one another by 180° and in the locking functional position placed therebetween.

## Revendications

1. Dispositif de commutation en forme de robinet à tournant sphérique, comprenant une pièce (11) de commande guidée avec possibilité de tourner dans un corps (1) de robinet et sous la forme d'un tournant sphérique de commutation qui a deux points (23, 25) de raccordement, **caractérisé en ce que** les deux points (23, 25) de raccordement peuvent, pour deux positions de fonctionnement de la pièce (11) de commande à 180° l'une de l'autre, être reliés par un dispositif (31) de soupape monté à l'intérieur de la pièce (11) de commande et, dans une position de fonctionnement d'obturation entre celles-ci sont séparés l'un de l'autre, dans lequel dans la première position de fonctionnement non-obturante à partir du deuxième raccord (25) de fluide et par des ouvertures (73) de paroi dans le corps (1) du robinet, le dispositif (31) de soupape est parcouru dans un sens, de manière à ce que le dispositif (31) de soupape soit parcouru sans être réglé et seulement sous l'effet d'étranglement d'un diaphragme (63) de mesure monté sur un trou (67) dans le fond (69) d'un piston (51) de réglage d'une soupape (33) de réglage du courant, de sorte que le dispositif (31) de soupape fonctionne comme robinet à étranglement et **en ce que**, lorsque le tournant sphérique de commutation est tourné par rapport à cela de 180° pour venir dans la deuxième position de fonctionnement non-obturante, la fonction de robinet est inversée de manière correspondante, de sorte qu'au moyen d'une soupape (33) de réglage du courant, il se produit une régulation du courant en volume dans l'afflux à partir du deuxième raccord (25) pour du fluide et un passage non régulé a lieu à l'entrée pour du fluide à partir du premier raccord (23) de fluide.

2. Dispositif de commutation suivant la revendication 1, **caractérisé en ce que** le dispositif (31) de soupape a au moins une partie (51) d'actionnement, qui sous l'effet d'un accumulateur (61) d'énergie, peut être mise dans une position active, de préférence de réglage ou d'obturation.

3. Dispositif de commutation suivant la revendication 1 ou 2, **caractérisé en ce que** la soupape (33) de réglage du courant a une balance manométrique, qui a comme partie d'actionnement, un piston (51) de réglage, qui est soumis à l'action d'un ressort et qui, en fonction d'une différence de pression produite sur un diaphragme (63) de mesure lors du passage dans le un sens d'écoulement, commande la section transversale d'un diaphragme (73) de réglage, le dispositif (31) de soupape pouvant être parcouru de manière non réglé lors du passage dans l'autre sens d'écoulement.

4. Dispositif de commutation suivant l'une des revendications précédentes,
**caractérisé en ce que** le dispositif (31) de soupape peut être vissé sous la forme d'un insert (33) à visser dans un canal traversant perpendiculaire à l'axe de rotation de la pièce (11) de commande, **en ce que** le piston (51) de réglage est précontraint dans l'insert (33) de vissage par un ressort (61) de compression en une position d'extrémité dégageant la section transversale du diaphragme (73) de réglage, et **en ce que** le piston (51) de réglage peut être mis, par la chute de pression produite par le passage dans le un sens sur le diaphragme (63) de mesure, dans des positions diminuant la section transversale du diaphragme (73) de réglage.

5. Dispositif de commutation suivant l'une des revendications précédentes, **caractérisé en ce qu'**il est prévu sur le corps (1) du robinet, des moyens (87) d'encliquetage et/ou de fixation, au moyen desquels une partie (37, 45) d'actionnement en rotation de la pièce (11) de commande peut être fixée de manière amovible dans les positions de fonctionnement décalées l'une de l'autre de 180° et dans la position de fonctionnement d'obturation entre celles-ci.
